# EUROPEAN PATENT SPECIFICATION

(11) **EP 2 153 621 B1**
(45) Date of publication and mention of the grant of the patent: **26.12.2018**
(21) Application number: 07748450.9
(22) Date of filing: 27.04.2007
(51) Int. Cl.: H04L 29/06, H04L 12/22, H04W 12/08

(54) **A METHOD AND A DEVICE FOR IMPROVED SERVICE AUTHORIZATION**
VERFAHREN UND EINRICHTUNG FÜR VERBESSERTE DIENSTAUTHORISIERUNG
PROCÉDÉ ET DISPOSITIF POUR UNE AUTORISATION DE SERVICE AMÉLIORÉE

(43) Date of publication of application: 17.02.2010
(73) Proprietor: Telefonaktiebolaget LM Ericsson (publ), 164 83 Stockholm (SE)
(72) Inventor: STENFELT, John, S-412 58 Göteborg (SE); LÖVSÉN, Lars, S-413 14 Göteborg (SE); MATTSSON, Hans, S-517 37 Bollebygd (SE); SANCHEZ SANTISO, Guadalupe, E-28047 Madrid (ES)
(74) Representative: Ericsson
(86) International application number: PCT/SE2007/050289
(87) International publication number: WO 2008/133561

(56) References cited:
- WO-A1-2007/090463
- US-A1- 2005 135 428
- US-A1- 2005 135 428
- US-B1- 6 628 954
- 3GPP TS 29.212 V7.0.0, [Online] March 2007, XP003020387 Retrieved from the Internet: <URL:http://www.3gpp.org/ftp/Specs/html-inf o/29212.htm>
- 3GPP TSG-CT WG3 MEETING #43BIS, FRANKFURT, GERMANY, [Online] vol. C3-070304, 11 April 2007 - 12 April 2007, XP003020388 Retrieved from the Internet: <URL:http://www.3gpp.orf/ftp/sg_ran/WG3_int erworking_ex-CN3/TSGC3_43bis_Frankfurt/Docs >

## Description

### TECHNICAL FIELD

The present invention discloses a method and a device by means of which improved service authorization can be obtained in a wireless access telecommunications system.

### BACKGROUND

At present, in some wireless access telecommunications systems, such as, for example 2G and 3G systems, such as 3G-GPRS, there are functions in the system for allowing or denying users access to services within the system or services outside of the system. In most 2G and 3G systems, the functions for allowing or denying a user such access are designed in the following manner: a user requests access to a service by means of a request to a node in the system, in a GPRS system the so called GGSN, the Gateway GPRS Support Node.

The GGSN has obtained knowledge of the user's rights and which services the user may access by means of another function in the system, usually known as the PCRF, Policy and Charging Rule Function. Usually, when a UE requests a new session, e.g. is turned on initially, the GGSN requests, and receives from the PCRF, a list that defines which services the user may or may not access. This list is then used by the GGSN during the session in question, in order to permit or deny the user access to services which the user requests access to.

If a user requests access to a service to which the GGSN wishes, according to the information from the PCRF, to deny him access to, the request may be redirected to a separate function in the system, which handles denial of service requests. This separate function will send a message to the UE informing the user of the denial, e.g. he will receive a message such as "Access Denied" or "Service not authorized".

In the context of allowing or denying access to a user, the GGSN assumes a role referred to as Policy Charging Enforcement Function, PCEF. The PCEF accesses the PCRF by means of an interface known as Gx.

Some services that a user is normally allowed to access may temporarily not be authorized, e.g. due to a number of PCRF-defined polices:
- A service that a user is normally allowed to access may not be authorized if the user roams into a different network,
- Some services may be authorized during certain periods of the day only, e.g. between 09:00 and 18:00 on weekdays only,
- Certain services may only be authorized in case the requested bearer provides good enough quality.
- Limitations in the user's terminal equipment.

Even though it is clear that the reason that one or more services may be denied for a user, the Gx interface only provides information regarding whether or not a user is allowed access to a service or not.

For example, it is impossible for a PCEF/GGSN to know if a user is denied access to a certain service due to the fact that the user's terminal doesn't support the service in question, or if the denial is due to the fact that the user is roaming in another network, in which the service in question is denied. Hence, the only action the PCEF can take in the case of a denial is to redirect service requests issued from the user terminal to a generic redirect address that informs the user that the service is denied for an unspecified reason, as exemplified by the messages above.

US 6 628 954 discloses accessing wireless data services in order to reduce messaging and to enable roaming subscribers to access data services. To obtain access to data services, a wireless subscriber unit establishes communication with a gateway system and requests data services from the gateway system. In response to the request, the gateway system queries the service control point regarding authorized data services for the subscriber unit. If the gateway system receives a negative reply from the service control point, then the gateway system denies access to the data services by the subscriber Unit. However, if the gateway system receives a positive reply from the service control point, then the gateway system enables access to the data services by the subscriber unit.

US 2005/135428 discloses gateway node and methods applicable for use in a communications network. The gateway node is configured to receive a request for a service. The gateway node also is configured to determine if the service can be provided and, if not, to generate and send a message to a requester of the service with an indication as to a cause why the service cannot be provided.

### SUMMARY

As has emerged from the description above, there is thus a need for a method by means of which a node such as, for example a PCEF/GGSN can provide a user who is denied access to a service to which he has requested access more information regarding the reason for the denial than is possible at present.

This need is addressed by the present invention in that it discloses a method for use in a wireless access telecommunication system, in which system there can be a number of user equipments, UE, and a first node to which a UE may send a request for access to a specific service.

The system in which the invention can be applied also comprises a control function which holds information about the access rights to specific services for a plurality of UEs in the system, and the system additionally comprises an interface between said first node and the control function.

The method of the invention comprises the step of letting the first node receive information about a UE's access rights from the control function, and also comprises the step of letting the first node handle access requests to a service from a UE using the access rights information from the control function. The method also comprises the step of letting the access rights information from the control function to the first node comprise a code regarding services to which the UE is denied access.

Thus, by means of the present invention, the first node, e.g. a PCEF/GGSN can use the code obtained from the control function, e.g. a PCRF, in order to provide users with more detailed information regarding the reason that they are denied access to a certain service. In a preferred embodiment of the present invention, the code is used by the first node (PCEF/GGSN) in order to redirect the access request to a second function in the system, and in this embodiment, the method also comprises the step of letting the second function send an explicit message regarding the reason for the denial to the requesting UE. However, it is also entirely possible to let the first node comprise a list of said codes, so that a code may be "decoded" in the first node, in which case a message which corresponds to the code in question may be sent to the UE from the first node.

In addition to the problem of "denial messages" which do not comprise sufficient amounts of information, an additional problem in present systems is that an operator may want to grant certain users access to certain services during a limited interval in time, such as for example, between 08:00 AM to 06:00 PM on weekdays. In order to achieve this with the present standard Gx protocol, the authorization information in the PCEF for all affected sessions will need to be updated essentially at the same time. This will cause massive peaks in Gx signalling, which is highly undesirable.

This problem is also addressed by the present invention, in that the invention in a particular embodiment comprises the step of letting the access rights information from the control function (e.g. PCRF) to the first node (e.g. PCEF/GGSN) comprise information about periods in time when the UE is allowed or denied access to one or more of said services.

Thus, by means of the present invention, it is made possible to inform users who are denied access to a certain service of the reason for the denial, and it is also possible to improve the way in which users may be denied or granted access to services based on time intervals.

These and other advantages of the present invention will become even more apparent from the following detailed description.

The invention also discloses an improved interface for use between the first node (e.g. PCEF/GGSN) and the control function (e.g. PCRF), as well as a node for use as said first node.

### BRIEF DESCRIPTION OF THE DRAWINGS

The invention will be described in more detail in the following, with reference to the appended drawings, in which
Fig 1 shows a prior art system, and
Fig 2 shows the system of fig 1, with the invention applied, and
Figs 3 and 4 show examples of event diagrams of the invention.

### DETAILED DESCRIPTION

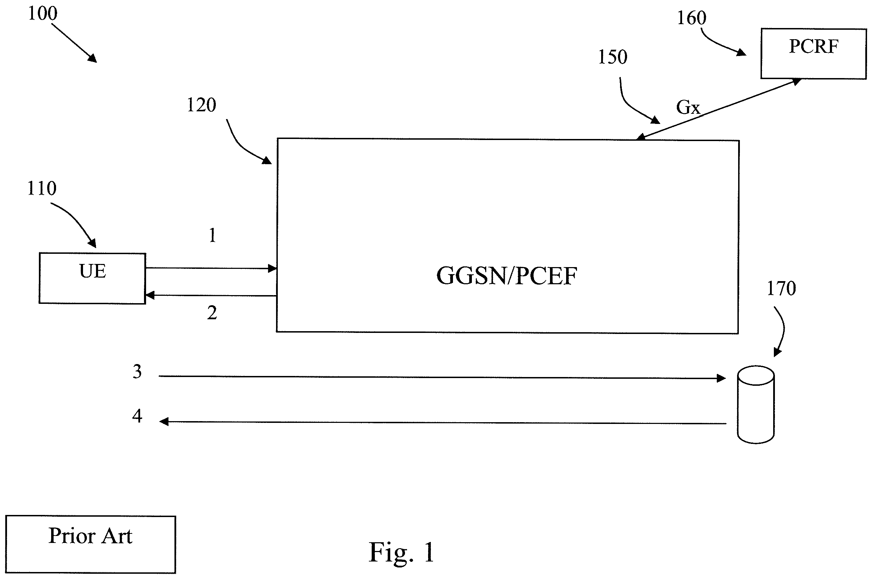

Fig 1 shows an example of a prior art system 100, shown in order to facilitate the reader's understanding of the invention. In fig 1, as well as in the description below, the invention will be described with the aid of system components and names from a 3G GPRS system, but it should be understood that this is by way of example only, the invention can be applied to virtually any system in which it is desired to solve the problems which are addressed by means of the invention.

As shown in fig 1, in the system 100 there can be a number of user equipment, UE, 110, and a first node 120, a GGSN, which in this text will alternatingly be referred to as a PCEF, a Policy Charging Enforcement Function, since the GGSN in this context constitutes the PCEF for GPRS.

It can be pointed out that a GPRS system comprises numerous components which are not shown in fig 1. This is due to the fact that only those components which are of immediate interest to the present invention will be shown in the drawings and described in this text. For example, the 3G GPRS system comprises a function known as the SGSN, which is positioned between the UE 110 and the PCEF/GGSN 120. However, the messages with which this invention is concerned are "passed through" the SGSN on their way between the UE and the PCEF/GGSN, which means that the SGSN is of less interest to this invention.

The PCRF 160 has information about which services that the UE 110 should be granted or denied access to. This information is communicated to the PCEF/GGSN, usually at the initial UE bearer service request, although the procedure may take place at other points in time as well. The interface between the PCRF 160 and the PCEF/GGSN 120 is known as the Gx interface.

Thus, the PCRF 160 communicates to the PCEF/GGSN 120 a list of services to which the UE 130 should be denied or granted access to. As an example, all services that are not granted in the list can be considered to be denied. The PCEF/GGSN stores this list, and when a UE 110 sends a request message, shown by the arrow 1 in fig 1 to the PCEF/GGSN 120, requesting access to a certain service, the following may happen:
- The PCEF/GGSN 120 grants the UE 110 access to the service in question based on information provided from the PCRF via the Gx interface. The request is routed/forwarded by the PCEF/GGSN to its destination.
- The PCEF/GGSN 120, by means of the information provided from the PCRF via the Gx interface, sees that the UE 110 may not be granted access to the service which it has requested access to. In this case, the arrow 2 from the PCEF/GGSN intercepts the request and sends a "redirect" response, shown by the arrow 2 in fig 1, to the UE, i.e. a message which redirects the UE's request to a second function 170 in the system, to which the UE's request is redirected, shown as the arrow 3 in fig 1. The second function 170 sends a message, shown by means of the arrow 4, to the UE 110. In the prior art system 100 of fig 1, this message can only be a standardized "denial message" such as "Access Denied" or "Service not authorized".

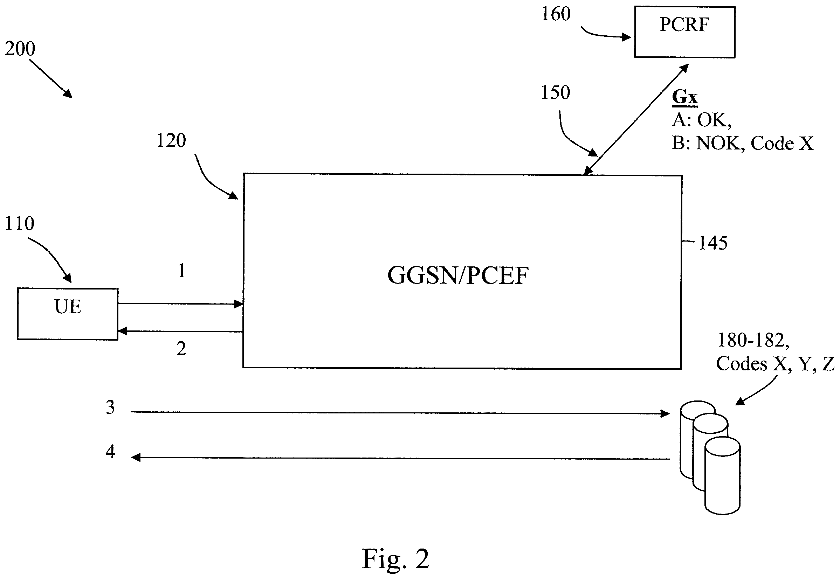

Fig 2 shows a system 200 of the invention. Components and functions which can be found in the system 100 of fig 1 have been given the same reference numbers in fig 1, and will not be explained again here.

In the system 200 of the invention, the control function 160, i.e. the PCRF, may send information to the PCEF/GGSN regarding a UE's access rights to a number of services via the Gx interface. However, in the system 200, as opposed to the system 100 of fig 1, the information sent from the PCRF 160 to the PCEF/GGSN 120 may have the following structure, as also indicated in fig 2:

### Examples of service authorization information provided over the Gx interface from the PCRF to the PCEF/GGSN:

Service "A": OK
Service "B": Not OK, "NOK", Code 2
Service "C": OK
Service "D": NOK; Code 4.

Thus, as can be seen, for services to which the user 110 is denied access, the PCRF uses the Gx interface to explicity inform the PCEF/GGSN 120 not only about which services that are authorized, but also which services that are not authorized (NOK), which may be temporary, together with a code coupled to the reason for the denial.

Subsequently, when a UE requests access to a service to which it, according to the information from the PCRF, should be denied access to, the PCEF/GGSN uses the codes comprised in the Gx message as follows:
- The UE 110 sends its request message, arrow 1 in fig 2.
- The PCEF/GGSN 120 identifies the requested service and sees that the UE 110 should be denied access to the service in question and sends a redirect message, arrow 2 to the UE 110. However, as opposed to the event sequence in the prior art system 100, the PCEF/GGSN now has additional information coupled to the access denial, said additional information being the code shown above. The code is, in a certain embodiment of the present invention, used in order to redirect the access request from the UE to one of a number of specified functions, shown as 180-182 in fig 2. The redirected request is shown by means of an arrow 3, and the response from the function 180-182 is shown by means of an arrow 4.

Since the denied request can be redirected to one of a number of functions 180-182, the contents of the "denial message" to the UE 110 can be tailored in a way which has been impossible hitherto. Preferably, each NOK code is tied to a specified one of the functions 180-182, by means of which each NOK code can be made to correspond to a certain denial message.

Thus, each of the functions 180-182 is prepared with a certain message, example of which might be:
- The requested service can only be reached from your Home PLMN, Public Land Mobile Network.
- The requested service cannot be accessed from this terminal type. Please contact customer support for minimal terminal requirements.
- The requested service can only be accessed between 0700 and 1800 Monday to Friday.
- The requested service requires a 3G connection.

Naturally, the number of "denial message functions" 180-182 shown in fig 2 are only example, the number can be varied more or less endlessly.

It should also be pointed out that the denial message functions 180-182 are merely one way of utilizing the enhanced Gx messages of the invention. It is also perfectly possible to let the PCEF/GGSN comprise the function of "decoding" the codes from the PCRF itself, so that the denial messages are sent directly from the PCEF/GGSN 120 to the UE 110 by a function for this in the PCEF/GGSN.

In addition, it is also possible to let the denial message function 180-182 be external to the PCEF/GGSN as shown in fig 2, but to let it be one function only, which as such comprises the ability to decode all of the codes sent from the PCRF regarding the reasons for denial.

As has emerged from the description above, the present invention comprises extending the Gx protocol so that the PCRF may communicate more information to the PCEF regarding reasons for denying a UE access to a service. The extensions to the Gx protocol may be referred to as Attribute Value Pairs, AVPs,a term which may be used below, AVPs being information containers used by the Gx protocol.

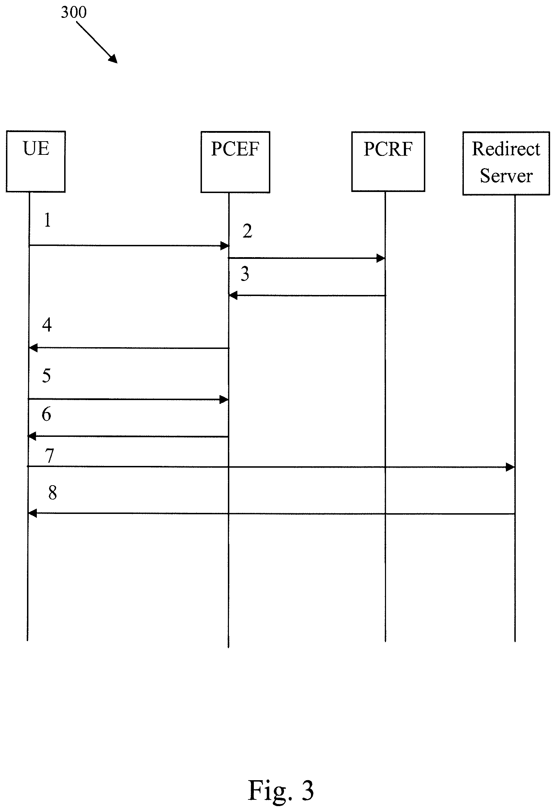

Fig 3 shows a signaling sequence 300 in which the AVPs of the present invention is used. The signaling is between a UE, a PCEF, a PCRF and a Redirect Server which corresponds to the functions 180-182 of fig 2.

The sequence is as follows:
1. Establish bearer service request: The UE sends a requests to the PCEF/GGSN to set up a bearer. For GPRS, this would be an Activate PDP Context Request.
2. Gx CCR, Credit Control Request, initial. The PCEF initiates a Gx session with the PCRF, and includes the UE identity, the requested QoS, PLMN-ld etc.
3. Gx CCA initial. The PCRF responds with a CCA, Credit Control Answer, containing one Charging-Rule-Install for a Charging-Rule-Base that is authorized and a Charging-Rule-Name which normally is available only in the Home PLMN. Since the UE in this example is currently roaming in another operator's network, the service is temporarily unauthorized. The CCA in question may contain the following information:
   Charging-Rule-Install AVP
      Charging-Rule-Base-Name = 1
   Charging-Rule-Install AVP
      Charging-Rule-Name=5
      Charging-Rule-Authorization AVP
         Authorization-State = DENIED_ROAMING
4. Establish Bearer Service Request. The Requested bearer is accepted. For GPRS, this would be an Activate PDP Context Accept.
5. The UE requests access to a web-page, e.g. URL "x". The PCEF detects that URL "x" corresponds to e.g. Charging-Rule No. 5which is temporarily not authorized due to roaming.
6. The PCEF sends a response to the UE with a redirect indication that includes the configured redirect server address used only for DENIED_ROAMING (url "y)
7. The UE issues a request for url "y"
8. The redirect server at URL "y" responds to the UE that the requested webpage can only be accessed from the Home PLMN.

In the following, by way of example only, some examples of AVPs of the present invention will be given.

### Charging-Rule-Install AVP

The authorization state for the current and next periods of time is included in the Charging-Rule Install AVP, by inserting the a new AVP: The Charging-Rule-Authorization AVP:
Charging-Rule-Install := < AVP Header: 1001 >
*[Charging-Rule-Definition]
*[Charging-Rule-Name]
*[Charging-Rule-Base-Name]
**[Charging-Rule-Authorization]**
*[AVP]

The authorization information provided in the Charging-Rule-Authorization AVP is valid for all Charging-Rule-Names and Charging-Rule-Base-Names provided in that instance of the Charging-Rule-Install AVP provided in a CCA or RAR, Re-Authorization Request.

If no Charging-Rule-Authorization AVP is present in a Charging-Rule-Authorization AVP then this implies that all Charging-Rule-Definitions, Charging-Rule-Names and Charging-Rule-Base-Names are authorized without any restrictions (standard solution).

### Charging-Rule-Authorization AVP

The Charging-Rule-Authorization AVP groups the AVPs that are required to define the authorization state for the current and next time period for the associated charging rules and charging rule bases.

The Charging-Rule-Authorization AVP is shared in the same Charging-Rule-Install for those Charging-Rule-Names or Charging-Rule-Base-Names that has the same Authorization-state.

The Charging-Rule-Authorization AVP may look as follows:
Charging-Rule-Authorization::= < AVP Header: 1055, Vendor Id: 193 >
{Authorization-State}
[Authorization-State-Change-Time]
[Next Authorization State]
*[AVP]

### Authorization-State AVP

The Authorization-State AVP may be of the type "enumerated", and specifies the authorization state and reason for non-authorization for the charging rules and charging rule bases provided in the Charging-Rule-Install AVP.

The following values can be defined for the Authorization-State AVP:

| | |
|---|---|
| AUTHORIZED | 0 |
| DENIED_CALENDAR_TIME | 1 |
| DENIED_ROAMING | 2 |
| DENIED_QUALITY_OF_SERVICE | 3 |
| DENIED_BLACKLISTED | 4 |
| DENIED_TERMINAL | 5 |
| DENIED_OPERATOR_REASON_ONE | 6 |
| DENIED_OPERATOR_REASON_TWO | 7 |
| DENIED_OPERATOR_REASON_THREE | 8 |
| DENIED_OPERATOR_REASON_FOUR | 9 |
| DENIED_OPERATOR_REASON_FIVE | 10 |
| DENIED_UNKNOWN_REASON | 11 |

As has been seen from the description given above, by means of the invention, a problem associated with "access denial messages" may be addressed. Another problem which may be solved by a particular embodiment of the invention is that an operator of a system may want to authorize some services to a large number of users during a limited period of time, such as a particular interval of a day, such as, for example, between 08:00 AM to 06:00 PM on weekdays. To achieve this with the present Gx protocol which is used between the PCRF and the PCEF, the authorization information in the PCEF of all affected sessions need to be updated more or less at the same time point in time. This causes massive peaks in Gx signalling in the system, which is undesirable.

In order to address this problem, the mentioned embodiment of the present invention comprises the step of letting the access rights information from the control function, i.e. the PCRF, to the first node, i.e. the PCRF/GGSN, comprise information about periods in time when a UE is allowed or denied access to one or more services.

As an example, some services may be authorized for a certain user during a specific period of time only, e.g. for 24 hours from the time when the service is activated, or during re-occurring periods of the day, e.g. between 07:00 - 18:00 on weekdays.

In order to provide such information to the PCEF, the "authorization code" described above, provided by the PCRF to the PCEF, the so called PCC-rule, can be associated with information regarding a specific point in time when the authorization state changes. The next authorization state that is valid after the authorization state change must also be provided for this kind of services. In this way, it will be possible for the PCEF to determine that e.g. a certain user is to be granted access to a certain service until, in this example, 18:00, and thereafter the user should be denied access to the service, due to calendar time restrictions. The opposite is of course also possible, i.e. the service is first temporarily denied to the user due to calendar time restrictions, but after 18:00, in the present example, the user is granted access to the service.

Another "building block" in the calendar time based authorization embodiment of the invention is a validity timer which schedules the PCEF to request new policy information from the PCRF. The validity timer is provided by the PCRF to the PCEF, and should typically be set longer than the authorization state change time, e.g. longer than 18:00 in the present example, but short enough to catch new policy information before the next consecutive authorization state change time occurs, i.e. in this example at the latest at 07:00 the following morning.

Thus, by means of calendar time based authorization embodiment of the invention, Gx signalling peaks may be avoided.

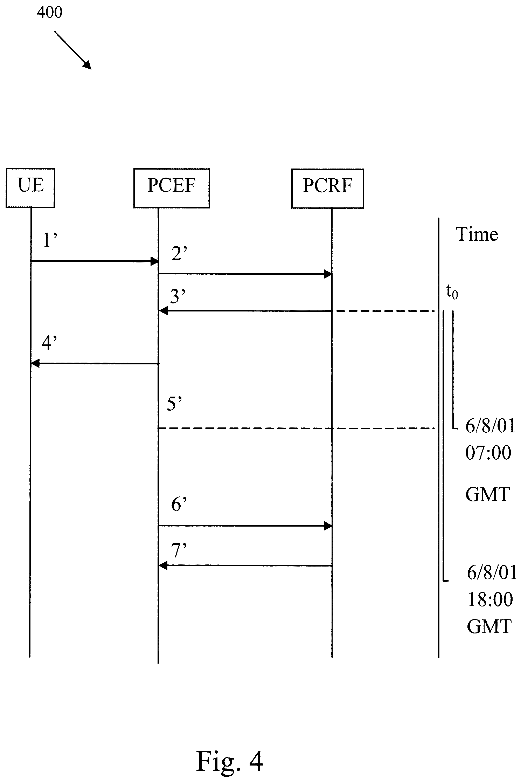

In order to explain the time based authorization or denial/grant of access to certain services, reference will now be made to fig 4, which is a signalling diagram 400 in which the time based denial/grant of access is used.

The signaling in fig 4 is between a UE, a PCEF and a PCRF. The signaling is as follows, with reference to the horizontal arrows shown in fig 4:
1'. Establish bearer service request. The UE sends a request to the PCEF/GGSN to set up a bearer. For GPRS, this would be an Activate PDP Context Request.
2'. Gx CCR initial. The PCEF/GGSN initiates a Gx session with the PCRF, and includes the UE identity, Requested QoS, PLMN-Id etc.
3'. Gx CCA initial. The PCRF responds with a CCA containing one Charging-Rule-Install for a Charging-Rule-Base that is authorized and a Charging-Rule-Name that is currently not authorized due to calendar time. The authorization state change time is set to be at 07:00 the next morning. When the authorization state change time has passed, access to the service is granted to the user (next authorization state). In addition, the authorization-validity-time states that the policy information must be refreshed by the PCEF before 18:00 the next day. The CCA in question may have the following format:
   Event-Trigger = TIME_CHANGE
   Charging-Rule-Install AVP
   Charging-Rule-Base-Name = 1
   Charging-Rule-Install AVP
   Charging-Rule-Name = 5
   Charging-Rule-Authorization AVP
   Authorization-State = DENIED_CALENDAR_TIME
   Authorization-State-Change-Time = 07/08/01, 07:00 UTC
   Next-Authorization-State = AUTHORIZED
   Authorization-Validity-Time = 07/08/01, 18:00 UTC
4'. Establish Bearer Service Request. The Requested bearer is accepted. For GPRS this would be an Activate PDP Context Accept. All service requests associated with the Charging-Rule-Name in question will be redirected to a redirect server for DENIED_CALENDAR_TIME for this bearer.
5'. At 07:00, the authorization state changes from DENIED_CALENDAR_TIME to AUTHORIZED. From now on, the PCEF will no longer redirect service requests for Charging-Rule-Name in question, but the requests will be passed through.
6'. CCR update. At a point in time before 18:00, the PCEF issues a new CCR in order to refresh the policy information. The PCEF is responsible for distributing this kind of requests in order to avoid signalling peaks in the case that there are many sessions which share the same Authorization-Validity-Time.
7'. CCA update. The PCRF responds with new policy information. The Charging-Rule in question now has the authorization state AUTHORIZED and a next authorization state that is DENIED_CALENDAR_TIME. The authorization state change time is at 18:00, and the policy information must be refreshed again at the latest at 07:00 the following day. The new values may look as follows:
   Event-Trigger = TIME_CHANGE
   Charging-Rule-Install AVP
   Charging-Rule-Name = 5
   Charging-Rule-Authorization AVP
   Authorization State = AUTHORIZED
   Authorization-State-Change-Time = 07/08/01, 18:00 UTC
   Next Authorization State = DENIED_CALENDAR_TIME
   Authorization-Validity-Time = 08/08/02, 07:00 UTC

Some examples of AVPs of the invention which may be used with the calendar based grant or denial of access to services are shown below. It should be pointed out that the AVPs below are merely examples, and are in no way to be seen as restrictive for the scope of protection sought for the present invention.

### Authorization-State-Change-Time AVP

The Authorization-State-Change-Time is a time-stamp identifying the date and time when the authorization state provided in the Authorization-State AVP will no longer be valid. An example of an authorization-State-Change-Time AVP is that it is of the type "Time" and includes the time in seconds since January 1, 1900, 00:00 UTC.

### Next-Authorization-State AVP

An example of the Next-Authorization-State AVP is that it is of the type "enumerated", and specifies the authorization state and reason for non-authorization after the expiration time, defined in the Authorization-State-Change-Time AVP, has been passed. The following values may be defined for the Next-Authorization-State AVP:

| | |
|---|---|
| AUTHORIZED | 0 |
| DENIED_CALENDAR_TIME | 1 |

### Authorization-Validity-Time AVP

The Authorization-Validity-Time AVP may be included in a Credit Control Answer, CCA, or in a Re-Authorization-Request, RAR. The Authorization-Validity-Time is a time-stamp identifying the date and time when the authorization information, provided in the Charging-Rule-Install AVPs, will no longer be valid. An example of a specific Authorization-Validity-Time AVP is that it is of the type "Time", and includes the time in seconds since January 1, 1900, 00:00 UTC.

### Event-Trigger AVP

The Event-Trigger AVP is suitably of the type "Enumerated". The Event-Trigger indicates an event that shall cause a re-request of PCC-Rules The following value may be defined for this AVP:

| | |
|---|---|
| TIME_CHANGE | 100 |

This value is used to indicate that before the given time, specified in the Authorization-Validity-Time AVP, new PCC-rules should be requested.

Note: If the Event-Trigger 100 and the Authorization-Validity-Time AVP are not provided, but the Authorization-State-Change-Time AVP has been provided in a Charging-Rule-Authorization AVP, then the next-authorization state will be a permanent state of authorization, until new PCC-decisions are provided by the PCEF. This is useful for accomplishing time-based subscriptions, e.g. 12 hour access to service "A".

The invention also comprises as such a node 120 as shown above, said node suitably being a PCEF/GGSN of a 2G or a 3G system such as the 3G GPRS system. Such a node will comprising means for receiving the information about a UE's access rights from the control function 160. These means 145 have been symbolically shown as a processor 145 in fig 2, but the means can also be a suitable combination of hardware or software.

A node of the invention will also comprise means for handling access requests to a service from a UE by using the access rights information from said control function, these means also suitably being the processor 145, which will also be able to handle the access rights information from the control function, the PCRF, including a code, X, Y, Z, regarding services to which the UE is denied access.

Suitably, the processor 145 also handles the redirection of access requests to services which a UE is denied access, as shown above, as well as handling information about periods in time when the UE 110 is allowed or denied access to one or more of said services, so that a UE which requests access to a certain service from the node 120 may be denied or granted access by the node 120 based on the time of day, week, month etc that the request is made.

In conclusion, the enhanced service authorization of the Gx interface as discloses by the present invention enables the PCEF/GGSN to carry out a selective service redirect to a redirect server which can provide detailed information to an end user, i.e. a UE regarding why the UE has been denied access to a certain service to which he has requested access, and to which service the user is normally allowed to access.

The calendar time based authorization information conveyed via the Gx interface as disclosed by the present invention provides the PCEF/GGSN with information that enables it to carry out service based access control for services that are authorized only for a certain period of time, or only during, for example, certain times of the day or the week.

By means of this information, it will be possible to avoid the signalling peaks that present day Gx solutions would imply for this kind of services, when the policy information of large numbers of sessions needs to be updated at the same time.

The invention is not restricted to the examples of embodiments described above and shown in the drawings, but may be varied freely within the scope of the appended claims.

## Claims

1. A method (300) for use in a wireless access telecommunications system (200), in which system there can be a number of user equipment, UE (110), and a first node (120) to which a UE may send a request for access to a specific service, the system (200) also comprising a control function (160) which holds information about the access rights to specific services for a plurality of UEs in the system, the system (200) in addition comprising an interface (150) between said first node (120) and the control function (160),
the method (300) comprising
- the step (3) of letting said first node receive information about a UE's access rights from said control function, and
- the step (5) of letting said first node handle access requests to a service from a UE using the access rights information from said control function,
- the step (3) of letting the access rights information from said control function to said first node comprise a code (X, Y, Z) regarding services to which the UE is denied access,
the method being **characterized in that**
the first node (120) is a Policy and Charging Enforcement Function node and the control function (160) is a Policy and Charging Rules Function; the method additionally comprises,
- if a UE (110) requests access to a service to which it is denied access according to the information from the control function (160), said code (X, Y, Z) is used by the first node (120) in order to redirect the access request to a second function (180-182) in the system,
- the method (300) also comprising the step (8) of letting the second function (180-182) send an explicit message regarding the reason for the denial to the requesting UE,
wherein the access rights information comprises information regarding services to which the UE is denied access, regarding services to which the UE is allowed access, together with the code (X, Y, Z) coupled to a reason for the denial.

2. The method (300, 400) of claim 1, additionally comprising
- the step (3') of letting the access rights information from said control function (160) to said first node (120) comprise information about periods in time when the UE (110) is allowed or denied access to one or more of said services.

3. A node (120) for use in a wireless access telecommunications system (200), in which system there can be a number of user equipment, UE (110), to which node (120) a UE may send a request for access to a specific
service, the node comprising
- means for exchanging information with a control function (160) in the system which holds information about the access rights to specific services for a plurality of UEs in the system, said exchange of information being carried out over an interface (150) between the node (120) and the control function (160), the node (120) comprising
- means (145) for receiving information about a UE's access rights from said control function (160) and
- means (145) for handling access requests to a service from a UE by using the access rights information from said control function, the node (120) additionally comprising
- means (145) for handling the access rights information from said control function comprises a code (X, Y, Z) regarding services to which the UE is denied access,
**characterized in**
- the first node is a Policy and Charging Enforcement Function node and the control function is a Policy and Charging Rule Function,
- said means (145) for handling access rights information use said codes (X, Y, Z) if a UE (110) requests access to a service to which it is denied access according to the information from the control function (160), said code (X, Y, Z) being used by said means (145) in order to redirect the access request to one of a number of second functions (180-182) in the system, the code being used in order to letting the second function (180-182) send an explicit message regarding the reason for the denial to the requesting UE,
wherein the access rights information comprises information regarding services to which the UE is denied access, regarding services to which the UE is allowed access, together with the code (X, Y, Z) coupled to a reason for the denial.

4. The node (120) of claim 3, additionally comprising means (145) for handling access rights information from said control function (160) which comprises information about periods in time when the UE (110) is allowed or denied access to one or more of said services, so that a UE which requests access to a certain service from the node (120) may be denied or granted access by the node (120) based on the time of day, week, or month that the request is made.

## Patentansprüche

1. Verfahren (300) zur Verwendung in einem Telekommunikationssystem für drahtlosen Zugang (200), wobei in diesem System eine Anzahl von Benutzereinrichtungen (UE) (110), und ein erster Knoten (120) vorhanden sein können, an den eine UE eine Anforderung auf Zugang zu einem bestimmten Dienst senden kann, wobei das System (200) auch eine Steuerfunktion (160) umfasst, die Informationen über die Rechte auf Zugang zu bestimmten Diensten für eine Vielzahl von UEs in dem System enthält, wobei das System (200) zusätzlich eine Schnittstelle (150) zwischen dem ersten Knoten (120) und der Steuerfunktion (160) umfasst, wobei das Verfahren (300) Folgendes umfasst
- den Schritt (3) des Zulassens, dass der erste Knoten Informationen über die Zugangsrechte einer UE von der Steuerfunktion erhält, und
- den Schritt (5) des Zulassens, dass der erste Knoten Zugangsanforderungen zu einem Dienst von einer UE unter Verwendung der Zugangsrechtsinformationen von der Steuerfunktion handhabt,
- den Schritt (3) des Zulassens, dass die Zugangsrechtsinformationen von der Steuerfunktion zu dem ersten Knoten einen Code (X, Y, Z) bezüglich Diensten umfassen, zu denen der UE der Zugang verweigert wird,
wobei das Verfahren **dadurch gekennzeichnet ist, dass** der erste Knoten (120) ein Policy and Charging Enforcement Function-Knoten ist und die Steuerfunktion (160) eine Policy and Charging Rules Function ist; das Verfahren zusätzlich Folgendes umfasst:
- wenn eine UE (110) Zugang zu einem Dienst anfordert, zu dem gemäß den Informationen von der Steuerfunktion (160) der Zugang verweigert wird, der Code (X, Y, Z) vom ersten Knoten (120) verwendet wird, um die Zugangsanforderung an eine zweite Funktion (180-182) in dem System weiterzuleiten,
- wobei das Verfahren (300) ferner den Schritt (8) des Zulassens umfasst, dass die zweite Funktion (180-182) eine explizite Nachricht bezüglich des Grundes für die Verweigerung an die anfordernde UE sendet,
wobei die Zugangsrechtsinformationen Informationen bezüglich Diensten, zu denen der UE der Zugang verweigert wird, bezüglich Diensten, zu denen die UE Zugang hat, zusammen mit dem Code (X, Y, Z), der mit einem Grund für die Verweigerung gekoppelt ist, umfassen.

2. Verfahren (300, 400) nach Anspruch 1, ferner umfassend
- den Schritt (3') des Zulassens, dass die Zugangsrechtsinformationen von der Steuerfunktion (160) an den ersten Knoten (120) Informationen über Zeiträume umfassen, in denen der UE (110) Zugang zu einem oder mehreren der Dienste erlaubt oder verweigert wird.

3. Knoten (120) zur Verwendung in einem Telekommunikationssystem für drahtlosen Zugang (200), wobei in dem System eine Anzahl von Benutzereinrichtungen (UE) (110) vorhanden sein kann, wobei eine UE an diesen Knoten (120) eine Anforderung auf Zugang zu einem bestimmten Dienst senden kann, wobei der Knoten Folgendes umfasst
- Mittel zum Austauschen von Informationen mit einer Steuerfunktion (160) in dem System, das Informationen über die Zugangsrechte für bestimmte Dienste für eine Vielzahl von UEs im System aufbewahrt, wobei der Informationsaustausch über eine Schnittstelle (150) zwischen dem Knoten (120) und der Steuerfunktion (160) erfolgt, wobei der Knoten (120) Folgendes umfasst
- Mittel (145) zum Empfangen von Informationen über die Zugangsrechte einer UE von der Steuerfunktion (160) und
- Mittel (145) zum Handhaben von Zugangsanforderungen für einen Dienst von einer UE unter Verwendung der Zugangsrechtsinformationen von der Steuerfunktion, wobei der Knoten (120) zusätzlich Folgendes umfasst
- Mittel (145) zum Handhaben der Zugangsrechtsinformationen von der Steuerfunktion, umfasst einen Code (X, Y, Z) bezüglich Diensten, zu denen der UE der Zugang verweigert wird,
**dadurch gekennzeichnet, dass**
- der erste Knoten ein Policy and Charging Enforcement Function-Knoten ist und die Steuerfunktion eine Policy and Charging Rule Function ist,
- die Mittel (145) zum Handhaben von Zugangsrechtsinformationen die Codes (X, Y, Z) verwenden, wenn eine UE (110) Zugang zu einem Dienst anfordert, zu dem ihr gemäß der Informationen von der Steuerfunktion (160) der Zugang verweigert wird, wobei der Code (X, Y, Z) von dem Mittel (145) verwendet wird, um die Zugangsanforderung an eine von einer Anzahl von zweiten Funktionen (180-182) in dem System weiterzuleiten, wobei der Code verwendet wird, um zuzulassen, dass die zweite Funktion (180-182) eine explizite Nachricht bezüglich des Grundes für die Verweigerung der Anforderung an die anfordernde UE sendet,
wobei die Zugangsrechtsinformationen Informationen bezüglich Diensten, zu denen der UE der Zugang verweigert wird, bezüglich Diensten, zu denen die UE Zugang hat, zusammen mit dem Code (X, Y, Z), der mit einem Grund für die Verweigerung gekoppelt ist, umfassen.

4. Knoten (120) nach Anspruch 3, zusätzlich umfassend Mittel (145) zum Handhaben von Zugangsrechtsinformationen von der Steuerfunktion (160), die Informationen über Zeiträume umfassen, in denen der UE (110) Zugang zu einem oder mehreren der Dienste erlaubt oder verweigert wird, sodass einer UE, die Zugang zu einem bestimmten Dienst von dem Knoten (120) anfordert, der Zugang auf Basis der Tageszeit, der Woche oder dem Monat, zu der/dem die Anforderung erfolgt, von dem Knoten (120) verweigert oder gewährt wird.

## Revendications

1. Procédé (300) pour une utilisation dans un système de télécommunications à accès sans fil (200), système dans lequel il peut y avoir un certain nombre d'équipements d'utilisateur, UE (110), et un premier noeud (120) vers lequel un UE peut envoyer une demande pour accéder à un service spécifique, le système (200) comprenant également une fonction de commande (160) qui détient des informations concernant les droits d'accès à des services spécifiques pour une pluralité d'UE dans le système, le système (200) comprenant de plus une interface (150) entre ledit premier noeud (120) et la fonction de commande (160),
le procédé (300) comprenant
- l'étape (3) consistant à laisser ledit premier noeud recevoir des informations concernant les droits d'accès d'un UE provenant de ladite fonction de commande, et
- l'étape (5) consistant à laisser ledit premier noeud gérer des demandes d'accès à un service à partir d'un UE en utilisant les informations de droits d'accès provenant de ladite fonction de commande,
- l'étape (3) consistant à laisser les informations de droits d'accès de ladite fonction de commande audit premier noeud comprendre un code (X, Y, Z) concernant des services auxquels l'UE a un accès refusé,
le procédé étant **caractérisé en ce que**
le premier noeud (120) est un noeud de fonction de mise en oeuvre de politique et de facturation et la fonction de commande (160) est une fonction de règles de politique et de facturation ; le procédé comprend en outre,
- si un UE (110) demande un accès à un service auquel il a un accès refusé selon les informations provenant de la fonction de commande (160), ledit code (X, Y, Z) est utilisé par le premier noeud (120) afin de rediriger la demande d'accès vers une deuxième fonction (180-182) dans le système,
- le procédé (300) comprenant également l'étape (8) consistant à laisser la deuxième fonction (180-182) envoyer un message explicite concernant la raison du refus à l'UE demandeur,
dans lequel les informations de droits d'accès comprennent des informations concernant des services auxquels l'UE a un accès refusé, concernant des services auxquels l'UE a un accès autorisé, conjointement avec le code (X, Y, Z) couplé à une raison pour le refus.

2. Procédé (300, 400) selon la revendication 1, comprenant en outre
- l'étape (3') consistant à laisser les informations de droits d'accès de ladite fonction de commande (160) vers ledit premier noeud (120) comprendre des informations concernant des périodes dans le temps où l'UE (110) a un accès autorisé ou refusé vers un ou plusieurs desdits services.

3. Noeud (120) pour une utilisation dans un système de télécommunications à accès sans fil (200), système dans lequel il peut y avoir un certain nombre d'équipements d'utilisateur, UE (110), noeud vers lequel (120) un UE peut envoyer une demande pour accéder à un service spécifique, le noeud comprenant
- un moyen pour échanger des informations avec une fonction de commande (160) dans le système qui détient des informations concernant les droits d'accès à des services spécifiques pour une pluralité d'UE dans le système, ledit échange d'informations étant effectué sur une interface (150) entre le noeud (120) et la fonction de commande (160), le noeud (120) comprenant
- un moyen (145) pour recevoir des informations concernant les droits d'accès d'un UE provenant de ladite fonction de commande (160) et
- un moyen (145) pour gérer des demandes d'accès à un service à partir d'un UE en utilisant les informations de droits d'accès provenant de ladite fonction de commande, le noeud (120) comprenant en outre
- un moyen (145) pour gérer les informations de droits d'accès provenant de ladite fonction de commande comprend un code (X, Y, Z) concernant des services auxquels l'UE a un accès refusé,
**caractérisé par**
- le premier noeud est un noeud de fonction de mise en oeuvre de politique et de facturation et la fonction de commande est une fonction de règle de politique et de facturation,
- ledit moyen (145) pour gérer des informations de droits d'accès utilise lesdits codes (X, Y, Z) si un UE (110) demande l'accès à un service auquel il a un accès refusé selon les informations provenant de la fonction de commande (160), ledit code (X, Y, Z) étant utilisé par ledit moyen (145) afin de rediriger la demande d'accès vers l'une parmi un certain nombre de deuxièmes fonctions (180-182) dans le système, le code étant utilisé afin de laisser la deuxième fonction (180-182) envoyer un message explicite concernant la raison du refus à l'UE demandeur,
dans lequel les informations de droits d'accès comprennent des informations concernant des services auxquels l'UE a un accès refusé, concernant des services auxquels l'UE a un accès autorisé, conjointement avec le code (X, Y, Z) couplé à une raison pour le refus.

4. Noeud (120) selon la revendication 3, comprenant en outre un moyen (145) pour gérer des informations de droits d'accès à partir de ladite fonction de commande (160) qui comprend des informations concernant des périodes dans le temps où l'UE (110) a un accès autorisé ou refusé à un ou plusieurs parmi lesdits services, de sorte qu'un UE qui demande un accès à un certain service à partir du noeud (120) peut avoir un accès refusé ou accordé par le noeud (120) sur la base du moment de la journée, de la semaine ou du mois auquel la demande est faite.
